# EUROPÄISCHE PATENTSCHRIFT

(11) **EP 2 578 353 B1**
(45) Veröffentlichungstag und Bekanntmachung des Hinweises auf die Patenterteilung: **24.04.2019**
(21) Anmeldenummer: 12187393.9
(22) Anmeldetag: 05.10.2012
(51) Int. Cl.: G05B 19/042, B23P 21/00

(54) **Montagearbeitsplatz**
Assembly workstation
Poste de travail de montage

(30) Priorität: 07.10.2011 DE 202011106404 U
(43) Veröffentlichungstag der Anmeldung: 10.04.2013
(73) Patentinhaber: iie GmbH & Co. KG, 83564 Soyen (DE)
(72) Erfinder: Kreß, Ekkehard, 83512 Wasserburg (DE)
(74) Vertreter: Oberhardt, Knut

(56) Entgegenhaltungen:
- WO-A2-98/20723
- WO-A2-2007/044558
- DE-A1-102006 016 562
- JP-A- 2001 185 709
- JP-A- 2007 148 995
- US-A1- 2005 006 569

## Beschreibung

Die Erfindung betrifft einen Montagearbeitsplatz nach dem Oberbegriff nach Anspruch 1. Ein solcher Montagearbeitsplatz ist aus der DE 10 2006 016562 A1 bekannt. Bei der Großserienmontage wird heute mit hoher Effizienz gearbeitet. Das bedeutet, dass kurze Montagezeiten erreicht werden und eine hohe Qualität reproduzierbar ist. Die Montage in der Großserie wird in vielen Bereichen bereits vollautomatisch durchgeführt. Dabei kommen meist Industrieroboter zum Einsatz, die in unterschiedlicher Weise programmiert werden und den entsprechenden Montageschritt selbstständig ausführen. Abhängig von den zu montierenden Geräten wird jedoch auch noch halbautomatisch montiert. Hier sind Werker einem Fließband zugeordnet, wobei jeder Werker immer wieder den selben Montageschritt ausführt. Bei einer Großserienmontage amortisiert sich aufgrund der hohen Stückzahl eine längere Anlernphase, in der dem jeweiligen Werker der von ihm durchzuführende Montageschritt intensiv antrainiert wird. Dies führt - ähnlich wie bei der vollautomatischen Montage - zu einer kurzen Montagezeit und einer hohen Reproduzierbarkeit. Bei Kleinserien würde sich ein entsprechender Aufwand nicht amortisieren, da sich die Trainingszeiten nur auf eine wesentlich geringere Stückzahl verteilen lassen. Auch ist es nicht möglich, für jeden Montageschritt einen Werker zu beschäftigen. Es werden daher von jedem Werker meist mehrere Montageschritte durchgeführt. Trotzdem muss die Anlernphase für jeden Montageschritt kürzer gehalten werden. Dies führt meist zu einer, gegenüber der Großserie, erhöhten Fehlerquote. Die Kosten für die fehlerhaften Geräte müssen auf die verkaufbaren Geräte umgelegt werden und erhöhen so deren Herstellungskosten.

Es wurden deshalb Montagearbeitsplätze, die speziell für Kleinserien vorgesehen sind, bereits mit einem Display zur Visualisierung des jeweils anstehenden Montageschritts und einer Datenbank zur Speicherung der Visualisierungsdaten ausgestattet. Weiterhin wurden bereits Mittel vorgesehen, die selbstständig die Beendigung von Montageschritten feststellen und zum nächsten Montageschritt weiterschalten oder den Montagevorgang beenden können. Da jeder Montageschritt auf dem Display dargestellt wird, kann ein Werker so ohne Trainingsphase sofort mit der Montage beginnen. Mit steigender Anzahl der durchgeführten Montagevorgänge erlernt der Werker die Montageschritte immer besser und die für die Montageschritte benötigte Zeit verkürzt sich entsprechend. Da sich der Werker auch nach einer großen Zahl bereits durchgeführter Montagevorgänge im Zweifelsfall jedes Mal wieder Anregungen von dem Display holen kann, steigt auch die Qualität und Reproduzierbarkeit der Montage an. Ein entsprechender Montagearbeitsplatz ist in der EP 2 052 807 B1 beschrieben.

In der DE 10 2006 016562 A1 ist ein Pick-By-Light-Regal beschrieben, welches für jedes Regalfach eine Anzeige aufweist, mit der das für den aktuellen Arbeitsschritt erforderliche Regalfach angezeigt wird. Bei einer falschen Entnahme, also bei einer Entnahme aus einem für den aktuellen Arbeitsschritt nicht angezeigten Regalfach, blinkt die Anzeige dieses Regalfachs. Die Anzeige kann folglich zu ihrer normalen Funktion noch eine Warnfunktion übernehmen, die aber ebenfalls von einer Hupe oder einer eigenen Warnanzeige übernommen werden kann, da diese Funktion nicht an ein bestimmtes Regalfach gebunden ist.

Die JP 2007 148995 A beschreibt ein System zur Bereitstellung von zu montierenden Komponenten, das den Werker bei der Auswahl der richtigen Komponente unterstützt. Hierzu ist an jedem Fach eine Anzeigeeinrichtung angebracht, die eine Vielzahl von Farben wiedergeben kann. Um das System zu instruieren, welche Komponente welchem Arbeitsschritt zuzuordnen ist, wird ein erster Prozess zur Eingabe der Abfolge der Entnahme initiiert.

Hierzu leuchten zuerst die Anzeigen aller Fächer. Der Operator entnimmt dann entsprechend den einzelnen Arbeitsschritten die Komponenten in der richtigen Weise und in der richtigen Reihenfolge. Die Anzeigen erlöschen wenn die jeweiligen Komponenten entnommen wurden. Dieser erste Initialisierungsprozess ist beendet, wenn keine Anzeige mehr leuchtet.

Der zweite Prozess steuert die Entnahme während der Montage. Hierzu wird dem Werker mit verschiedenen Farben angezeigt, wie er die Komponente zu entnehmen hat, beispielsweise mit der linken Hand, mit der rechten Hand oder beidhändig.

Bei einigen Montageschritten, insbesondere bei Montageschritten, die manuell ohne Werkzeug durchgeführt werden, wie beispielsweise das Einstecken von Bolzen, das Montieren von einrastenden Bauteilen wie Gehäusen, oder auch das Aufbringen von Kleber oder Lack, war bisher ein Bedienelement, wie z. B. ein Knopf oder ein Fußschalter notwendig, mit dem zum nächsten Montageschritt weitergeschaltet werden musste. Das selbe gilt beim Einsatz von nicht programmierbaren Werkzeugen, die keine Verbindung mit einer Montagesteuerung halten. Das auch hier notwendige manuelle Weiterschalten verzögert den Arbeitsfluss und erhöht die Fehlerquote.

Der Erfindung liegt die Aufgabe zugrunde, einen Montagearbeitsplatz für die Serienfertigung nach dem Oberbegriff von Anspruch 1 so auszugestalten, dass insbesondere bei der werkzeuglosen Montage von Kleinteilen ebenfalls eine automatische Weiterschaltung zum nächsten Montageschritt möglich ist. Weiterhin soll auch dann automatisch zum nächsten Montageschritt weitergeschaltet werden, wenn ein Werkzeug ohne Werkzeugsteuerung und Sensorik verwendet wird. Der erfindungsgemäße Montagearbeitsplatz soll speziell für kleinere Serien geeignet sein, bei denen von einem Werker eine Vielzahl von Montageschritten an einem Montagearbeitsplatz durchgeführt wird.

Gelöst wird die Aufgabe gemäß der Erfindung durch einen Montagearbeitsplatz für die Serienfertigung mit den Merkmalen von Anspruch 1. Erfindungsgemäß sind in dem Gestell über jeder Kleinteilebox und/oder jedem Werkzeug eine Markierungseinrichtung mit wenigstens zwei unterschiedlichen Markierungsfunktionen und ein Entnahmedetektor angebracht. Mit der ersten Markierungsfunktion lässt sich kenntlich machen, aus welcher Kleinteilebox für den gerade durchzuführenden Montageschritt Kleinteile entnommen werden müssen. Über die zweite Markierungsfunktion lässt sich zum gleichen Zeitpunkt auch schon die Kleinteilebox erkennen, deren Inhalt für den nächsten Montageschritt benötigt wird. Der Entnahmedetektor meldet dagegen der Steuerung jede Entnahme, egal ob es sich um Teile aus einer Kleinteilebox oder um ein nicht programmierbares Werkzeug handelt.

Hierdurch wird der Vorteil erreicht, dass es dem Werker überlassen werden kann, ob er mehrere gleiche Kleinteile, die er für einen Montageschritt benötigt auf einmal oder aber nacheinander aus der Kleinteilebox entnimmt. Er weiß über die zweite Markierungsfunktion bereits, welche Kleinteile er für den nächsten Montageschritt benötigt. Hat er also den momentanen Montageschritt abgeschlossen, greift er in diese mit der zweiten Markierungsfunktion kenntlich gemachte Kleinteilebox. Durch den Entnahmedetektor erkennt die Steuerung diesen Vorgang und schaltet jetzt auf den nächsten Montageschritt weiter, bei dem dem Werker wieder aufgezeigt wird, wie der Montageschritt durchzuführen ist und was mit dem Entnommenen zu tun ist. Eine manuelle Weiterschaltung zum nächsten Montageschritt ist dadurch nicht mehr nötig.

Durch den Entnahmedetektor kann aber auch eine Fehlentnahme verhindert werden. Greift der Werker versehentlich in eine Kleinteilebox, die nicht durch die Markierungseinrichtung gekennzeichnet ist, so kann dies über den dort angebrachten Entnahmedetektor festgestellt und ein Alarm generiert werden.

In dem Gestell kann auch wenigstens ein Werkzeug, insbesondere ein nicht programmierbares Werkzeug, bereitgehalten werden. Auf diese Weise ist es möglich, mit einem nicht mit der Steuerung verbundenen Werkzeug in gleicher Weise zu verfahren wie mit der Entnahme von Kleinteilen. Die Weiterschaltung wird auch hier durch einen Entnahmedetektor ausgelöst.

Die für die Montage benötigten Teile können auch auf zwei oder mehr Gestelle verteilt werden. So bietet sich beispielsweise eine Aufteilung auf ein Gestell mit gerätespezifischen Teilen und ein weiteres Gestell mit Standardteilen an. Bei dieser Aufteilung kann das Gestell mit den Standardteilen immer am Montagearbeitsplatz verbleiben. Es muss lediglich darauf geachtet werden, dass ein vorbestimmter Füllstand der Kleinteileboxen nicht unterschritten wird. Lediglich das andere Gestell mit den gerätespezifischen Teilen muss für jeden Auftrag neu bestückt werden.

Besonders vorteilhaft weist die Markierungseinrichtung wenigstens eine Lichtquelle, insbesondere eine LED auf. LEDs sind heute bereits sehr günstig erhältlich und haben eine Helligkeit erreicht, die herkömmliche Beleuchtungen überflüssig macht. Eine solche LED kann folglich neben der Markierungsfunktion auch noch die Beleuchtung der Kleinteile oder des Werkzeugs übernehmen. Bei der Verwendung wenigstens einer LED ergeben sich unterschiedliche Möglichkeiten, die Erfindung umzusetzen.

Bei einem ersten Ausführungsbeispiel ist eine Markierungsfunktion als Dauerlicht und eine andere Markierungsfunktion als Blinklicht ausgebildet. Wenn also der Werker einen Montageschritt gerade ausführt, während dessen er Kleinteile aus einer Kleinteilebox benötigt, leuchtet über dieser Kleinteilebox die LED kontinuierlich. Über einer anderen Kleinteilebox, in der sich Kleinteile für den nächsten Montageschritt befinden, blinkt die darüber angeordnete LED.

Es spielt nun keine Rolle, ob der Werker nur einmal in die Kleinteilebox greift und so viele Kleinteile heraus nimmt, wie er für den anstehenden Montageschritt benötigt, oder ob er die benötigten Teile durch mehrmaliges Hineingreifen heraus nimmt. In jedem Fall wird die Steuerung erst dann weiter geschaltet, wenn er in die Kleinteilebox eingreift, über der die LED gerade blinkt. In diesem Fall erlischt die LED, die bis dahin mit Dauerlicht betrieben wurde, die bis dahin blinkende LED schaltet um auf Dauerlicht, die LED über der Kleinteilebox mit den Kleinteilen für den nächsten Montageschritt beginnt zu blinken und auf dem Bildschirm wird auf den nächsten Montageschritt umgeschaltet. Dies gilt analog wenn für den nächsten Montageschritt ein Werkzeug benötigt wird.

Bei einem anderen Ausführungsbeispiel weist die Markierungseinrichtung zwei Lichtquellen in unterschiedlicher Farbe auf. So kennzeichnet beispielsweise eine weiße LED die aktuell benötigte Kleinteilebox oder das aktuell benötigte Werkzeug, während die Kleinteilebox oder das Werkzeug für den nächsten Montageschritt beispielsweise durch eine grüne LED gekennzeichnet wird.

Vorteilhaft ist die Markierungseinrichtung so angebracht, dass sich eine indirekte Beleuchtung der Kleinteilebox und/oder des Werkzeugs ergibt. Der Werker wird auf diese Weise nicht geblendet und kann trotzdem die zu entnehmenden Kleinteile aufgrund der Helligkeit heute üblicher LEDs ausgezeichnet erkennen.

Bei einem Ausführungsbeispiel der Erfindung ist der Entnahmedetektor als Näherungssensor ausgebildet. Seit solche Näherungssensoren in Mobiltelefonen verbaut werden, sind die Kosten dafür aufgrund der Massenproduktion sehr gering.

Bei einem anderen Ausführungsbeispiel ist der Entnahmedetektor als Kamera ausgebildet. Auch diese Bauteile sind bereits zu geringen Kosten erhältlich. Gegenüber einem Näherungssensor besteht aber der Vorteil, dass mit einer Kamera gleichzeitig der Füllstand der Kleinteilebox überwacht werden kann. Eine derartige Füllstandsüberwachung lässt sich sehr einfach über eine erkennbare Markierungsfarbe oder ein erkennbares Markierungsmuster auf der Innenseite des Bodens der Kleinteilebox realisieren. Auf diese Weise kann die Montagesteuerung an der betroffenen Kleinteilebox z. B.über eine sowieso vorhandene LED, einen Alarm erzeugen, wenn ein vorgegebener Bereich mit der Markierungsfarbe oder dem Markierungsmuster sichtbar wird. Diese Ausführungsform bietet sich insbesondere für ein Gestell mit Standardteilen an, das am Montagearbeitsplatz verbleibt und nicht für jeden Auftrag neu bestückt wird.

Bei einem Ausführungsbeispiel der Erfindung sind Markierungseinrichtung und der Entnahmedetektor auf einer SMD-Platine untergebracht, die an dem Gestell befestigt ist. Die Befestigung kann über eine an dem Gestell angebrachte Halterung oder direkt mit einem Befestigungsstift oder ähnlichem erfolgen. Solche SMD-Platinen können mit sehr geringen Kosten hergestellt werden. Da die SMD-Platinen für jede Kleinteilebox und für jedes Werkzeug vorgesehen sein sollten, machen sich Einsparungen pro Platine in den Gesamtkosten nicht unerheblich bemerkbar.

Vorteilhaft ist die SMD-Platine mit einem optisch transparenten Lack überzogen. Durch diese Maßnahme lässt sich ein Gehäuse einsparen und die notwendige Schutzfunktion trotzdem erreichen. Die Kosten können so weiter gesenkt werden.

Um eine einfache Verbindung der Platinen mit der Montagesteuerung realisieren zu können, sind die SMD-Platinen über eine Steckverbindung in ein Bus-System integriert. Dazu wird üblicherweise nur ein mehradriges Kabel benötigt, an das alle Platinen angeschlossen sind.

Bei einer Weiterbildung der Erfindung sollen mehrere Werker von verschiedenen Arbeitsplätzen auf das gleiche Gestell mit Kleinteileboxen und/oder Werkzeugen zugreifen können. Zu diesem Zweck ist die Markierungseinrichtung mit unterschiedlichen Markierungsfunktionen für wenigstens zwei Werker ausgestattet. Besonders vorteilhaft ist für jeden Werker eine LED in einer anderen Farbe vorgesehen, wobei die LED dann im Dauerlicht oder blinkend betrieben wird. Selbstverständlich sind aber auch andere Unterscheidungskriterien, wie beispielsweise unterschiedliche Blinkfrequenzen möglich.

Bei der Entnahme mehrerer Werker aus dem gleichen Gestell, kann ein Problem entstehen, wenn ein Werker trotz unterschiedlicher Anzeigefarben versehentlich in die Kleinteilebox eingreift, die für die Entnahme durch einen anderen Werker angezeigt wird. In diesem Fall würde für den einen Werker zum nächsten Arbeitsschritt weiter geschaltet werden obwohl er seinen Arbeitsschritt noch nicht beendet hat. Der Entnahmedetektor ist deshalb so ausgebildet ist, dass er zwischen wenigstens zwei Werkern unterscheidet. Bei einem Eingriff durch einen falschen Werker kann auf diese Weise der Fehler sofort festgestellt und eine entsprechender Hinweis oder Alarm generiert werden.

Eine Unterscheidung zwischen mehreren Werkern kann beispielsweise über einen Fingerprintsensor erfolgen, der von den Werkern vor jedem Eingriff zu betätigen ist. Wesentlich komfortabler, schneller und mit einer geringeren Fehlequote belastet ist es aber wenn eine Identifikationseinrichtung vorgesehen ist, die an der Hand der Werker angebracht ist.

Die Identifikationseinrichtung kann beispielsweise als Armband ausgebildet sein. Hier könnte es jedoch bei sehr schmalen Kleinteileboxen zu Problemen mit der richtigen Zuordnung kommen, da bei einer schrägen Handstellung unter Umständen die benachbarte Kleinteilebox anstatt der anspricht, aus der entnommen wird. Die Identifikationseinrichtung könnte auch in einem Handschuh untergebracht werden, oder auf den Handrücken aufgeklebt werden. Die geringsten Störungen für den Werker und die geringste Fehlerquote bei der Identifikation durch die richtige Kleinteilebox ergeben sich jedoch wenn die Identifikationseinrichtung als Fingerring ausgebildet ist.

Die Identifikationseinrichtung darf nur auf geringe Entfernungen wirken, um eine falsche Identifikation durch benachbarte Kleinteileboxen vermeiden zu können. Weiterhin sollen die benötigten Bauteile preisgünstig erhältlich sein. Es hat sich deshalb als besonders vorteilhaft herausgestellt, wenn der Entnahmedetektor einen RFID-Sender und der Fingerring einen Transponder aufweisen. Der Transponder ist programmierbar, so dass für jeden Werker ein unterscheidbarer Code vergeben werden kann. Weiterhin benötigt der Transponder keine eigene Energieversorgung, so dass ein Batteriewechsel nie notwendig wird.

Weitere Einzelheiten und Vorteile der Erfindung ergeben sich aus den Unteransprüchen im Zusammenhang mit der Beschreibung eines Ausführungsbeispiels, das anhand der Zeichnung eingehend erläutert wird.

Es zeigt:
- Fig. 1: eine Pinzipskizze des erfindungsgemäßen Montagearbeitsplatzes,
- Fig. 2: eine perspektivische Darstellung eines Gestells zur Aufnahme von Kleinteileboxen und
- Fig. 3: einen Schnitt durch das Gestell aus Fig. 2.

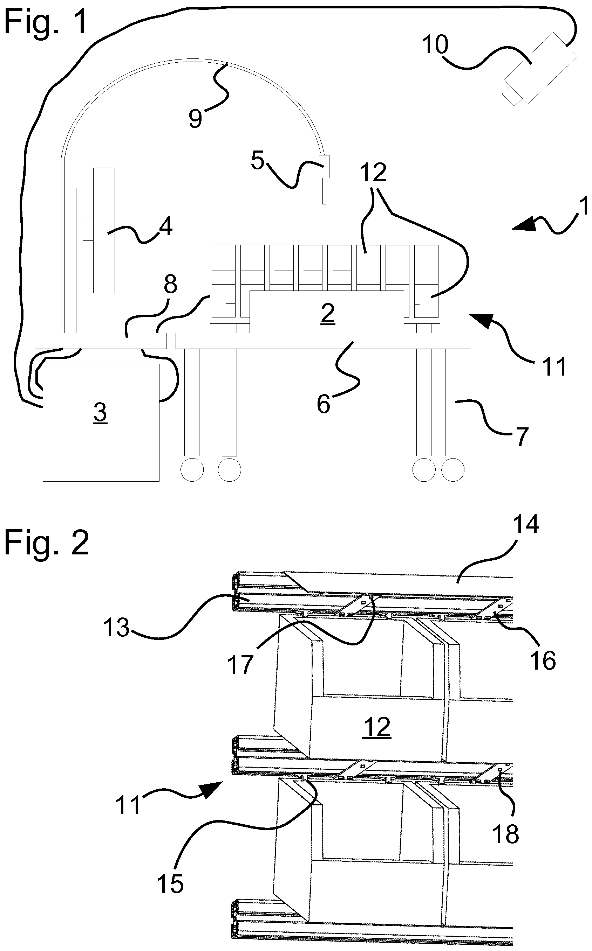

Der in Fig. 1 gezeigte Montagearbeitsplatz 1 für eine Kleinserienfertigung weist eine Anschlussbasis 8 auf, die fest montiert ist und an der alle elektrischen Anschlüsse, sowie alle Datenkabel zusammenlaufen. Mit der Anschlussbasis 8 ist auch der Bildschirm 4 verbunden. Dieser kann irgendwo in Sichthöhe fest montiert, aber auch, wie in Fig. 1 gezeigt, als Standgerät auf der Anschlussbasis 8 ausgeführt sein. Ebenfalls mit der Anschlussbasis 8 verbunden ist die Montagesteuerung 3, die hier in einen üblichen Personal Computer (PC) integriert ist. An die Montagesteuerung 3 sind die Datenkabel eines Schraubers 5, des Bildschirms 4, des Gestells 11 und einer Kamera 10 angeschlossen. In diesem Ausführungsbeispiel ist eine Anbindung über Kabel gezeigt, aber selbstverständlich ist auch eine kabellose Anbindung, beispielsweise über WLAN möglich.

Weiterhin besitzt die Anschlussbasis 8 einen Werkzeuggalgen 9 mit Kabeln für den elektrischen Anschluss des programmierbaren Schraubers 5 und für die Datenübertragung zwischen dem Schrauber 5 und der Montagesteuerung 3. Die Kamera 10 ist bei dem beschriebenen Ausführungsbeispiel nur für die Erstellung der Montageanweisung notwendig und ist daher nicht fest installiert. Zur Erstellung der Montageanweisung wird die Kamera 10 auf einem Stativ so montiert, dass der Sichtwinkel der Kamera in etwa dem Sichtwinkel eines Werkers entspricht, der bei der Montage auf das zu montierende Gerät 2 schaut. Auf diese Weise ist gewährleistet, dass auf dem Bildschirm 4 der selbe Ausschnitt des Geräts 2 dargestellt wird, den der montierende Werker vor sich sieht.

Nicht fest mit der Anschlussbasis 8 verbunden ist die Montagegrundplatte 6. Diese ruht auf einem fahrbaren Tischgestell 7. Das zu montierende Gerät 2 auf der Montagegrundplatte 6 kann so in einfacher Weise zu anderen Montagearbeitsplätzen oder zu einer Prüfstation gebracht werden.

In Blickrichtung hinter dem fahrbaren Tischgestell 7 mit der Montagegrundplatte 6 steht das ebenfalls fahrbare Gestell 11 für die Kleinteileboxen 12, die an dem Gestell 11 eingehängt sind. Das Gestell 11 ist über ein Bus-Kabel mit der Anschlussbasis 8 und darüber mit der Montagesteuerung 3 verbunden.

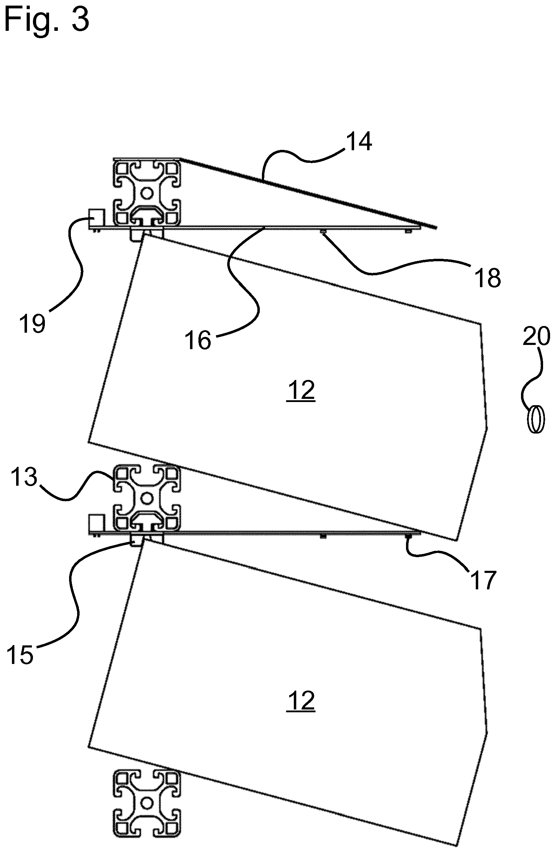

Aus den Darstellungen in den Figuren 2 und 3 sind Einzelheiten des Gestells 11 und der eingehängten Kleinteileboxen 12 zu erkennen. Das Gestell 11 ist aus Strangprofilen 13 aufgebaut, die durch hier nicht dargestellte vertikale Komponenten miteinander verbunden sind. In die Unterseite des Strangprofils 13 sind jeweils Kippstopper 15 eingedrückt, die die Kleinteileboxen 12 in ihrer leicht nach vorne gekippten Position halten. Mit ihrem Boden stehen die Kleinteileboxen 12 auf der Oberseite des darunter liegenden Strangprofils 13 auf. Auf der Oberseite des obersten Strangprofils ist eine Abdeckung 14 befestigt.

An der Unterseite der Strangprofile 13 sind jeweils zwischen den Kippstoppern 15, mittig über den Kleinteileboxen 12, die SMD-Platinen 16 befestigt. Diese Platinen sind mit einer weißen LED 18 und einem Näherungssensor 17 bestückt. Um den Platinen einen gehäuse-ähnlichen Schutz zu geben, wurden sie mit einem optisch transparenten Lack überzogen.

Die SMD-Platinen 16 sind so befestigt, dass sie etwas nach hinten über das Strangprofil 13 hinaus ragen. Auf diese Weise ist der auf den Platinen montierte Bus-Stecker 19 von hinten frei zugänglich und kann einfach mit dem hier nicht gezeigten Bus-Kabel des Gestells 11 verbunden werden.

Kleinserien umfassen üblicherweise eine Gerätezahl von 100-5000 Stück pro Jahr. Diese gesamte Losgröße wird dann, abhängig von der Produktwertigkeit, in über das Jahr verteilte Abrufaufträge in der Größe von 50-500 Stück aufgeteilt. Der erfindungsgemäße Montagearbeitsplatz ist für solche Auftragsgrößen vorgesehen.

Im Folgenden werden die Vorgänge an dem erfindungsgemäßen Montagearbeitsplatz näher beschrieben:
Wird ein Auftrag erteilt, so muss zuerst eine Montageanleitung erstellt werden. Es wird eine relationale Datenbank benutzt, in der die Montageanleitung mit Bezug auf das zu montierende Gerät abgespeichert wird. Dieser Montageanleitung werden die einzelnen Montageschritte zugeordnet. In der Datenbank werden ebenfalls die Montageparameter der einzelnen Montageschritte abgespeichert. Im Rahmen der Fertigungssteuerung wird über die Auftragsabwicklung eine Fertigungskommission des Geräts mit den entsprechenden Losgrößen der einzelnen Abrufaufträge erstellt.

Auch die Stücklisten sind einem Gerät zugeordnet und werden bei der Erstellung einer Materialliste auf die Montageschritte aufgeteilt. Selbst bei der Erstellung der Materiallisten kann die Montagesteuerung 3 mit einbezogen werden. So ist es z. B. möglich bei einer durchzuführenden Verschraubung die entsprechenden Parameter, wie Festigkeit der Verschraubung, Tiefe der Gewindebohrung u.s.w. in eine Tabelle einzugeben. Die Montagesteuerung 3 entnimmt der Tabelle die passende Schraube und die dazugehörigen Montageparameter wie Anzugdrehmoment, Drehwinkel oder Umdrehungsanzahl, Drehzahl, und Typ bzw. Größe der Werkzeugklinge oder des Werkzeugeinsatzes. Auch der Toleranzbereich für diese Parameter kann der Tabelle entnommen werden. Sowohl die gefundene Schraube, wie auch die Montageparameter werden dem entsprechenden Montageschritt zugeordnet und abgespeichert.

Die Daten für die Visualisierung des Montageschritts werden mit der Kamera 10, insbesondere einer digitalen Kamera, erzeugt. Diese Kamera 10 ist direkt mit der Montagesteuerung 3 über Kabel oder drahtlose Datenübertragung verbunden. Das Bildformat und die Auflösung der Kamera 10 sind genau an das Bildformat und die Auflösung des Bildschirms 4 angepasst. Hierdurch wird mit Speicherplatz ökonomisch umgegangen und man erreicht dennoch die bestmögliche Darstellung. Außerdem erübrigt sich eine Nachbearbeitung der so erzeugten Bilddaten. Nach der Aufnahme eines Bildes durch die Kamera 10 kann das Bild sofort auf dem Bildschirm 4 begutachtet werden. Entspricht das Bild nicht den Erwartungen, kann die Aufnahme wiederholt werden und das erste Bild wird überschrieben. Wird das Bild dagegen für gut befunden, wird es per Tastendruck in die Datenbank übernommen und zu dem Montageschritt gehörend abgespeichert. Zusätzlich kann ein Hinweistext eingegeben werden. Vorzugsweise wird der Hinweistext zusammen mit dem Bild auf dem Bildschirm 4 so dargestellt, dass die Bildinformation nicht überlagert wird und sichtbar bleibt.

Jedem Montageschritt ist mindestens der Datensatz mit den Bilddaten zugeordnet. Weiterhin nimmt der Montageschritt Bezug auf einen Datensatz mit dem zu montierenden Material. Einigen Montageschritten sind jedoch noch weitere Datensätze, so z. B. Datensätze mit den Montageparametern zugeordnet. Die Montageschritte, die ohne Werkzeug oder mit einem nicht programmierbaren Werkzeug, beispielsweise mit einer Klebepistole durchgeführt werden, weisen keinen Datensatz mit Montageparametern auf. Alle Montageschritte gemeinsam sind in der Datenbank hinterlegt und bilden zusammen die Montageanleitung. Die Montageanleitung referenziert wiederum auf ein Gerät und eine Kommissionsnummer.

Bei der Erstellung der Montageanleitung entsteht die Materialliste, die für jeden Montageschritt das benötigte Material beinhaltet. Es handelt sich dabei gewissermaßen um eine nach Montageschritten sortierte Stückliste. Die Materialliste enthält folglich das Material in der Reihenfolge, in der es während der Montage benötigt wird.

Zur Erstellung der Montageanleitung benötigt die Montagesteuerung 3 folglich die Daten über die Größe der gesamten Serie, die Größe eines Abrufauftrags, einzuhaltende Termine usw.. Auch die Stückliste wird der Montagesteuerung 3 übermittelt. Während der Erstellung der Montageanleitung werden dann noch die Bilddaten zu den einzelnen Montageschritten eingegeben. Die Montagesteuerung 3 legt in der Datenbank die Montageanleitung und die Materialliste ab.

Idealerweise werden die für die Montage benötigten gerätespezifischen Teile in einem fahrbaren Gestell 11 in den Kleinteileboxen 12 zusammengestellt. Das Gestell 11 wird für jeden Abrufauftrag neu bestückt. In dem hier beschriebenen Ausführungsbeispiel wird an dem Gestell 11 ein maschinenlesbares Barcode-Etikett oder einen RFID-Transponder mit der Kommissionsnummer des Montagevorgangs angebracht.

Die Zusammenstellung der für die Montage benötigten Kleinteile kann wieder durch die Montagesteuerung 3 erfolgen. Sie bedient sich dabei der Auftragsdaten, auf die sie über die Kommissionsnummer zugreift. Weiterhin greift sie auf die vorher erstellte Materialliste zurück. Unter Umständen ist sogar eine automatische Entnahme von Lagerware möglich. Sollte dies nicht der Fall sein, wird das Gestell 11 von Hand bestückt.

Bereits bei der Bestückung des Gestells 11 können die erfindungsgemäße Markierungseinrichtung 18 und der Entnahmedetektor 17 genutzt werden. Hierfür sortiert die Montagesteuerung 3 die Stückliste nach der Häufigkeit, mit der die benötigten Teile verwendet werden. Die Kleinteileboxen 12 werden dann so verteilt, dass die Kleinteilebox mit den am häufigsten benötigten Teilen am einfachsten und die Kleinteilebox mit den am wenigsten benötigten Teilen am schlechtesten zu erreichen ist.

Zu Beginn der Bestückung blinkt die LED, unter der die erste Kleinteilebox eingehängt werden soll. Sobald beim Einhängen der ersten Kleinteilebox der zugeordnete Näherungssensor ausgelöst wird, beginnt die LED über dem Platz für die zweite Kleinteilebox zu blinken und die bisher blinkende LED schaltet auf Dauerlicht. Sollte das Einhängen nicht beim ersten Versuch gelingen, ergibt sich dadurch kein Problem, da durch die weitere Auslösung des zugeordneten Näherungssensors noch keine Weiterschaltung erfolgt. Erst wenn die erste Kleinteilebox sicher eingehängt wurde und mit der zweiten Kleinteilebox der Näherungssensor ausgelöst wird, der der blinkenden LED zugeordnet ist, wird weiter geschaltet. Dabei erlischt die bisher mit Dauerlicht betriebene LED, die bisher blinkende LED wird auf Dauerlicht geschaltet und die LED über der als nächstes einzuhängender Kleinteilebox beginnt zu blinken.

Die jeweils nächste Kleinteilebox ist also immer unter der blinkenden LED einzuhängen, wodurch diese auf Dauerlicht geschaltet wird und der Platz für die nächste Kleinteilebox wiederum durch Blinken angezeigt wird. Es ist aber selbstverständlich auch eine vollautomatische Bestückung des Gestells 11 möglich.

Für die Montage wird das Gestell 11, wie aus Fig. 1 ersichtlich, seitlich an den Montagearbeitsplatz 1 gebracht. Mit einem hier nicht gezeigten Barcodescanner oder RFID-Leser, der ebenfalls mit der Montagesteuerung 3 in Verbindung steht, wird die Kommissionsnummer des Montagevorgangs aufgenommen. Über diese Kommissionsnummer wird die richtige Montageanleitung und die dazu gehörigen zusätzlichen Informationen aus der Datenbank geladen. Die zusätzlichen Informationen werden über die Fertigungssteuerung bereitgestellt und umfassen die Auftragsdaten. Die Auftragsdaten beinhalten auch die Gesamtzahl des Abrufauftrags.

Die Montage beginnt damit, dass der Werker zuerst seine Personalnummer eingibt bzw. diese von seinem Firmenausweis mit dem Barcodescanner abtastet. Danach wird die Grundplatte oder das Chassis auf der Montagegrundplatte 6 ausgelegt.

Der Werker wird dann über den Bildschirm 4 angewiesen, Barcode-Etiketten oder RFID-Transponder mit eindeutiger fortlaufender Geräteidentifikationsnummer auf dem Chassis entsprechend der auf dem ersten Bild gezeigten Position anzubringen. Dann wird mit dem Barcodescanner oder dem RFID-Leser die Nummer abgetastet. Nachdem das Chassis erfasst wurde, schaltet die Montagesteuerung 3 automatisch auf den ersten Montageschritt. Gleichzeitig werden im Hintergrund neue Datensätze angelegt, deren Referenz die eben erfasste Geräteidentifikationsnummer als Chassis-ID ist. Zu diesen Datensätzen, denen auch die Personalnummer des Werkers zugeordnet ist, werden ab jetzt alle gerätespezifischen Daten erfasst. Insbesondere wird der jeweils zuletzt ausgeführte Montageschritt mit allen Montageparametern aufgezeichnet.

Nach dem Beginn der Montage wird die Montageanleitung in Form von Bildern in der vorher definierten Reihenfolge der Montageschritte auf dem Bildschirm 4 in zentraler Sichtposition des Werkers am Montagearbeitsplatz 1 dargestellt.

Beispielhaft sei hier ein Montageschritt erläutert, bei dem der programmierbare Schrauber 5 zu verwenden ist. Der Schrauber 5 wird von der Montagesteuerung 3 mit den in der Datenbank zu diesem Montageschritt hinterlegten Montageparametern programmiert und ist sofort für die entsprechende Verschraubung bereit.

Dem Werker wird durch die Montagesteuerung 3 angezeigt, welches Teil er verwenden muss. Hierzu wird durch die LED 18 der Innenraum einer Kleinteilebox 12 deutlich sichtbar erhellt. Gleichzeitig beginnt über einer anderen Kleinteilebox die LED 18 zu blinken. Befindet sich eine dieser Kleinteileboxen 12 in der obersten Reihe des Gestells 11 wird durch die Abdeckung 14 auch hier eine Blendung des Werkers verhindert.

Der Werker entnimmt dem Gestell 11 das zu befestigende Teil und setzt dieses, wie auf dem Bildschirm 4 angezeigt, auf das Chassis auf. Nach der Beendigung dieses Montageschrittes weiß der Werker bereits aus welcher Kleinteilebox er die nächsten Teile benötigt. In dem hier beschriebenen Beispiel handelt es sich um Schrauben, mit denen das zuvor aufgesetzte Teil an dem Chassis befestigt werden muss. Der Werker fasst folglich in die Kleinteilebox, über der die LED bereits blinkt und löst damit den Näherungssensor 17 aus. Die Montagesteuerung 3 schaltet in diesem Moment auf den nächsten Montageschritt. Dabei wird die bisher mit Dauerlicht betriebene LED ausgeschaltet und die bisher blinkende LED auf Dauerlicht umgestellt.

Das zu dem nächsten Montageschritt auf dem Bildschirm 4 dargestellte Bild zeigt den Schrauber 5 mit erfasster Schraube am Einsatzort. Es spielt nun keine Rolle, ob der Werker nur eine Schraube oder auf einmal alle für die Befestigung notwendigen Schrauben aus der Kleinteilebox entnimmt. In jedem Fall setzt der Werker eine entnommene Schraube in den Schrauber 5 ein. Der Schrauber 5 wird nun mit der Schraube über die Verschraubungsposition gebracht und durch Schubstart ausgelöst.

Entsprechend den programmierten Montageparametern wird der Verschraubungsvorgang ausgeführt und die gemessenen Montagedaten in der Datenbank mit Referenz auf den Montageschritt und die Chassis-ID abgespeichert. Zusätzlich wird noch die für den Montageschritt benötigte Arbeitszeit in der Datenbank abgelegt. Bei jeder Schraube wird dem Werker angezeigt ob die Verschraubung in Ordnung ist. Ist das aufgesetzte Teil ordnungsgemäß verschraubt und die Daten liegen innerhalb der erlaubten Toleranz, schaltet die Montagesteuerung 3 auf den nächsten Montageschritt.

Bei dem nächsten Montageschritt soll beispielsweise ein Bolzen in eine Bohrung eingeklebt werden. Zu diesem Zweck wurde an dem Gestell 11 (in der Zeichnung nicht dargestellt) auch eine Heißklebepistole angehängt, über der sich ebenfalls eine SMD-Platine befindet. Bei der Weiterschaltung zu diesem Montageschritt erlischt die LED 18 über der Kleinteilebox 12 mit den soeben benötigten Schrauben. Gleichzeitig beginnt die LED über der Heißklebepistole im Dauerbetrieb zu leuchten und die LED über der Kleinteilebox mit den Bolzen zu blinken. Das auf dem Bildschirm 4 dargestellte Bild zeigt wie mit der Heißklebepistole die Bohrung mit Kleber gefüllt wird.

Der Werker führt diesen Vorgang aus und weiß bereits, dass er als nächstes in die durch Blinken gekennzeichnete Kleinteilebox mit den Bolzen greifen muss. Sobald er dies tut, schalte die LED über der Heißklebepistole ab und die LED über der Kleinteilebox mit den Bolzen geht in den Dauerbetrieb über. Auch das auf dem Bildschirm 4 dargestellte Bild wechselt und zeigt nun wie der Bolzen in die Bohrung mit dem Kleber eingedrückt wird.

Sollte der Werker versehentlich in eine falsche Kleinteilebox greifen, in der nicht die richtigen Bolzen untergebracht sind, wird der Näherungssensor 17 dieser falschen Kleinteilebox ausgelöst. Die Montagesteuerung generiert sofort einen Alarm, so dass der Werker auf seinen Fehler aufmerksam wird, noch bevor er ein falsches Teil in die Bohrung einsetzt.

Letztendlich entsteht bei der Montage das Gerät 2. Zu diesem Gerät werden während der Montage gerätespezifische und unter Umständen dokumentationspflichtige Messwerte und Daten erzeugt und abgespeichert. Diese Daten können später insbesondere bei der Montageoptimierung und der Fehlersuche hilfreich sein.

Da die Montagegrundplatte 6 auf einem fahrbaren Tischgestell 7 aufliegt, kann die Montage jederzeit unterbrochen bzw. abgebrochen werden. Dies ist wichtig, wenn z. B. elektrische Prüfungen an anderen Prüfplätzen durchgeführt, oder andere Geräte vorgezogen werden müssen. In diesen Fällen wird die Montage des Geräts 2 auf der Montagegrundplatte 6 unterbrochen und die Montagegrundplatte 6 wird zusammen mit dem fahrbaren Tischgestell 7 ausgetauscht. Falls auf eine andere Kommissionsnummer umgestellt wird, kommt auch noch das Gestell 11 zum Austausch.

Die Montage bereits teilmontierter Geräte kann fortgesetzt werden, indem die Chasis-ID mit dem Barcodescanner oder dem RFIG-Leser wiederum eingelesen wird. Die Montagesteuerung 3 schaltet automatisch auf die richtige Kommissionsnummer, die richtige Montageanweisung und den richtigen Montageschritt.

Somit können unterbrochene Arbeiten einfach fortgesetzt werden. Dies ist möglich, weil die Datenstrukturen entsprechend angelegt sind.

Bei dem erfindungsgemäßen Montagearbeitsplatz 1 muss kein Montageschritt mehr manuell abgeschlossen werden. Auch Montageschritte die ohne programmierbares Werkzeug ausgeführt werden, können automatisch abgeschlossen werden, da dem Werker immer bereits der nächste Handgriff angezeigt wird und der aktuelle Montageschritt durch diesen nächsten Handgriff beendet wird. Es muss daher weder ein entsprechender Handtaster oder Fußschalter vorgesehen werden. Die Montage wird dadurch schneller und weniger fehleranfällig.

Um vorzusehen, dass mehrere Werker auf das gleiche Gestell 11 zugreifen, müssen die einzelnen Werker identifizierbar und z. B. über verschiedene Farben inndividuell ansprechbar sein. Es sind deshalb verschiedenfarbige LEDs auf der SMD-Platine 16 vorgesehen, die jedem Werker die aktuelle oder die bevorstehende nächste Entnahme in einer dem Werker individuell zugeordneten Farbe anzeigen können. Die Identifikation des Werkers erfolgt über den Identifikationsring 20 (siehe Fig. 3), den jeder Werker an einem Finger der Entnahmehand trägt. Der Identifikationsring 20 ist mit einem Transponder ausgestattet, in den ein individueller Code einprogrammiert ist.

Bei diesem Ausführungsbeispiel der Erfindung ist statt des Näherungssensors 17 ein RFID-Sender vorgesehen, der den Code des Transponders auf kurze Entfernung ausliest. Durch die kurze Kommunikationsdistanz zwischen RFID-Sender und Transponder kann eine Fehlidentifikation durch eine Nachbar-Box praktisch ausgeschlossen werden.

Der Identifikationsring 20 sollte so ausgeführt sein, dass er allen bestehenden Sicherheitsvorschriften gerecht wird und kein Gefahr für Unversehrtheit des Werkers bedeutet. So sollte er beispielsweise als offener Ring ausgeführt sein, der sich gut an die Anatomie jedes einzelnen Werkers anpassen lässt und leicht abgezogen werden kann, wenn der Werker mit dem Ring irgendwo hängenbleibt. Auch das Material sollte so gewählt werden, dass der Ring den Werker möglich wenig beeinträchtigt und keine allergischen Reaktionen auslöst.

Ebenso kann der Identifikationsring 20 zur Anmeldung des Werkers an dem Montagearbeisplatz verwendet werden. Eine Anmeldung durch eine über eine Tastatur eingegebene ID-Nummer oder einen eingescannten Barcode ist dann nicht mehr notwendig.

### Bezugszeichenliste:

- 1: Montagearbeitsplatz
- 2: zu montierendes Gerät
- 3: Montagesteuerung
- 4: Bildschirm
- 5: Schrauber
- 6: Montagegrundplatte
- 7: fahrbares Tischgestell
- 8: Anschlussbasis
- 9: Werkzeuggalgen
- 10: Kamera
- 11: Gestell für Kleinteileboxen
- 12: Kleinteileboxen
- 13: Strangprofil
- 14: Abdeckung
- 15: Kippstopper
- 16: SMD-Platine
- 17: Näherungssensor
- 18: LED
- 19: Stecker
- 20: Identifikationsring

## Patentansprüche

1. Montagearbeitsplatz (1) für eine Serienfertigung zum Durchführen eines Montagevorgangs mit mehreren Montageschritten, der mit einer Montagesteuerung (3) verbunden ist, mit einem Gestell (11), in dem Kleinteileboxen (12) und/oder ein oder mehrere Werkzeuge bereitgehalten werden und mit Mitteln, die selbstständig die Beendigung eines Montageschritts feststellen und zum nächsten Montageschritt weiterschalten oder den Montagevorgang beenden, wobei in dem Gestell (11) über jeder Kleinteilebox (12) und/oder jedem Werkzeug eine Markierungseinrichtung (18) mit wenigstens zwei unterschiedlichen Markierungsfunktionen und ein Entnahmedetektor (17) zur Detektion der Entnahme durch einen Werker angebracht sind, **dadurch gekennzeichnet, dass** durch eine erste Markierungsfunktion die Kleinteilebox (12) oder das Werkzeug für den gerade durchzuführenden Montageschritt und durch eine weitere Markierfunktion die Kleinteilebox (12) oder das Werkzeug für den nächsten Montageschritt zum gleichen Zeitpunkt kenntlich machbar ist.

2. Montagearbeitsplatz nach Anspruch 1, **dadurch gekennzeichnet, dass** die Markierungseinrichtung wenigstens eine Lichtquelle (18), insbesondere eine LED aufweist.

3. Montagearbeitsplatz nach Anspruch 2, **dadurch gekennzeichnet, dass** eine Markierungsfunktion als Dauerlicht und eine andere Markierungsfunktion als Blinklicht ausgebildet ist.

4. Montagearbeitsplatz nach Anspruch 2, **dadurch gekennzeichnet, dass** die Markierungseinrichtung (18) zwei Lichtquellen in unterschiedlicher Farbe aufweist.

5. Montagearbeitsplatz nach Anspruch 3 oder 4, **dadurch gekennzeichnet, dass** die Markierungseinrichtung (18) so angebracht ist, dass sich eine indirekte Beleuchtung der Kleinteilebox (12) und/oder des Werkzeugs ergibt.

6. Montagearbeitsplatz nach Anspruch 5, **dadurch gekennzeichnet, dass** der Entnahmedetektor als Näherungssensor (17) ausgebildet ist.

7. Montagearbeitsplatz nach Anspruch 5, **dadurch gekennzeichnet, dass** der Entnahmedetektor (17) als Kamera ausgebildet ist.

8. Montagearbeitsplatz nach Anspruch 6 oder 7, **dadurch gekennzeichnet, dass** die Markierungseinrichtung (18) und der Entnahmedetektor (17) auf einer SMD-Platine (16) untergebracht sind, die in einer am Gestell (11) befestigten Halterung fixiert ist.

9. Montagearbeitsplatz nach Anspruch 8, **dadurch gekennzeichnet, dass** die SMD-Platine (16) mit einem optisch transparenten Lack überzogen ist.

10. Montagearbeitsplatz nach Anspruch 9, **dadurch gekennzeichnet, dass** die SMD-Platinen (16) über eine Steckverbindung (19) in ein Bus-System integriert sind.

11. Montagearbeitsplatz nach Anspruch 1, **dadurch gekennzeichnet, dass** die Markierungseinrichtung (18) mit unterschiedlichen Markierungsfunktionen für wenigstens zwei Werker ausgestattet ist.

12. Montagearbeitsplatz nach Anspruch 11, **dadurch gekennzeichnet, dass** der Entnahmedetektor (17) so ausgebildet ist, dass er zwischen wenigstens zwei Werkern unterscheidet.

13. Montagearbeitsplatz nach Anspruch 12, **dadurch gekennzeichnet, dass** eine Identifikationseinrichtung (20) vorgesehen ist, die an der Hand der Werker angebracht ist.

14. Montagearbeitsplatz nach Anspruch 13, **dadurch gekennzeichnet, dass** die Identifikationseinrichtung als Fingerring (20) ausgebildet ist.

15. Montagearbeitsplatz nach Anspruch 14, **dadurch gekennzeichnet, dass** der Entnahmedetektor (17) einen RFID-Sender und der Fingerring (20) einen Transponder aufweisen.

## Claims

1. Assembly workstation (1) for a serial production to perform an assembly operation with a plurality of assembly steps, which is connected to an assembly control system (3), with a rack (11), within which small-part boxes (12) and/or one or a plurality of tools are provided and with means that automatically detect the completion of an assembly step and that switch ahead to the next assembly step or end the assembly step, wherein, in the rack (11), a marking device (18) with at least two different marking functions and a removal detector (17) for detecting the removal by the worker are attached over each small-part box (12) and/or each tool, **characterized in that** the small-part box (12) or the tool for the assembly step at hand that must be carried out is made identifiable by a first marking function, and the small-part box (12) or the tool for the next assembly step is made identifiable by another marking function.

2. Assembly workstation according to Claim 1, **characterized in that** the marking device comprises at least one light source (18), in particular, an LED.

3. Assembly workstation according to Claim 2, **characterized in that** a marking function is configured as a continuous light and another marking function is configured as a blinking light.

4. Assembly workstation according to Claim 2, **characterized in that** the marking device (18) comprises two light sources with different colours.

5. Assembly workstation according to Claim 3 or 4, **characterized in that** the marking device (18) is attached in such a way that an indirect lighting of the small-part box (12) and/or of the tool results.

6. Assembly workstation according to Claim 5, **characterized in that** the removal detector is designed as a proximity sensor (17).

7. Assembly workstation according to Claim 5, **characterized in that** the removal detector (17) is designed as a camera.

8. Assembly workstation according to Claim 6 or 7, **characterized in that** the marking device (18) and the removal device (17) are accommodated on an SMD printed circuit board (16), which is fixed in a mount attached to the rack (11).

9. Assembly workstation according to Claim 8, **characterized in that** the SMD printed circuit board (16) is coated with an optically transparent paint.

10. Assembly workstation according to Claim 9, **characterized in that** the SMD printed circuit boards (16) are integrated into a bus system via a plug connection (19).

11. Assembly workstation according to Claim 1, **characterized in that** the marking device (18) is equipped with different marking functions for at least two workers.

12. Assembly workstation according to Claim 11, **characterized in that** the removal detector (17) is designed in such a way that it distinguishes between at least two workers.

13. Assembly workstation according to Claim 12, **characterized in that** an identification device (20) is provided, which is attached to the hand of the worker.

14. Assembly workstation according to Claim 13, **characterized in that** the identification device is designed as a finger ring (20).

15. Assembly workstation according to Claim 14, **characterized in that** the removal detector (17) comprises an RFID transmitter and the finger ring (20) comprises a transponder.

## Revendications

1. Poste de travail de montage (1) pour une fabrication en série afin de réaliser un processus de montage avec plusieurs étapes de montage, qui est relié à une commande de montage (3), avec un châssis (11) dans lequel des boîtes de petites pièces (12) et / ou un ou plusieurs outils sont tenus à disposition et avec des moyens qui constatent automatiquement l'achèvement d'une étape de montage et passent à l'étape de montage suivante ou achèvent le processus de montage, dans lequel sont agencés dans le châssis (11), au-dessus de chaque boîte de petites pièces (12) et / ou de chaque outil, un dispositif de marquage (18) avec au moins deux fonctions de marquage différentes et un détecteur de prélèvement (17) pour la détection du prélèvement par un ouvrier, **caractérisé en ce que** par une première fonction de marquage, la boîte de petites pièces (12) ou l'outil pour l'étape de montage devant justement être réalisée et, par une autre fonction marqueuse, la boîte de petites pièces (12) ou l'outil pour l'étape de montage suivante peut être rendu reconnaissable en même temps.

2. Poste de travail de montage selon la revendication 1, **caractérisé en ce que** le dispositif de marquage présente au moins une source lumineuse (18), plus particulièrement une LED.

3. Poste de travail de montage selon la revendication 2, **caractérisé en ce qu'**une fonction de marquage est conçue comme une lumière constante et une autre fonction de marquage comme une lumière clignotante.

4. Poste de travail de montage selon la revendication 2, **caractérisé en ce que** le dispositif de marquage (18) présente deux sources lumineuses de couleur différente.

5. Poste de travail de montage selon la revendication 3 ou 4, **caractérisé en ce que** le dispositif de marquage (18) est agencé de manière telle qu'il en résulte un éclairage indirect de la boîte de petites pièces (12) et / ou de l'outil.

6. Poste de travail de montage selon la revendication 5, **caractérisé en ce que** le détecteur de prélèvement est conçu comme un capteur de proximité (17) .

7. Poste de travail de montage selon la revendication 5, **caractérisé en ce que** le détecteur de prélèvement (17) est conçu comme un appareil photo.

8. Poste de travail de montage selon la revendication 6 ou 7, **caractérisé en ce que** le dispositif de marquage (18) et le détecteur de prélèvement (17) sont placés sur une platine CMS (16), qui est fixée dans un support fixé au châssis (11).

9. Poste de travail de montage selon la revendication 8, **caractérisé en ce que** la platine CMS (16) est revêtue d'une laque visuellement transparente.

10. Poste de travail de montage selon la revendication 9, **caractérisé en ce que** les platines CMS (16) sont intégrées dans un système de bus par une connexion enfichable (19).

11. Poste de travail de montage selon la revendication 1, **caractérisé en ce que** le dispositif de marquage (18) est équipé de différentes fonctions de marquage pour au moins deux ouvriers.

12. Poste de travail de montage selon la revendication 11, **caractérisé en ce que** le détecteur de prélèvement (17) est conçu de manière telle qu'il fait la différence entre au moins deux ouvriers.

13. Poste de travail de montage selon la revendication 12, **caractérisé en ce qu'**un dispositif d'identification (20) est prévu, qui est agencé à la main des ouvriers.

14. Poste de travail de montage selon la revendication 13, **caractérisé en ce que** le dispositif d'identification est conçu comme une bague de doigt (20) .

15. Poste de travail de montage selon la revendication 14, **caractérisé en ce que** le détecteur de prélèvement (17) présente un détecteur RFID et la bague de doigt (20) un transpondeur.
